# EUROPÄISCHE PATENTSCHRIFT

(11) **EP 1 525 378 B1**
(45) Veröffentlichungstag und Bekanntmachung des Hinweises auf die Patenterteilung: **13.08.2008**
(21) Anmeldenummer: 03740449.8
(22) Anmeldetag: 09.07.2003
(51) Int. Cl.: F01N 3/28, B01J 35/04, F01N 3/035

(54) **METALLISCHE LAGE MIT BEREICHEN UNTERSCHIEDLICHER MATERIALDICKE, VERFAHREN ZUR HERSTELLUNG EINER SOLCHEN METALLISCHEN LAGE UND ZUMINDEST TEILWEISE AUS SOLCHEN METALLISCHEN LAGEN HERGESTELLTER WABENK RPER**
METALLIC LAYER WITH REGIONS OF VARYING MATERIAL THICKNESS, METHOD FOR PRODUCTION OF SUCH A METALLIC LAYER AND HONEYCOMB AT LEAST PARTLY MADE FROM SUCH METALLIC LAYERS
COUCHE METALLIQUE A PARTIES PRESENTANT DES EPAISSEURS DE MATERIAU DIFFERENTES, SON PROCEDE DE PRODUCTION ET CORPS EN NID D'ABEILLE PRODUITS AU MOINS PARTIELLEMENT A PARTIR DESDITES COUCHES METALLIQUES

(30) Priorität: 02.08.2002 DE 10235767; 28.03.2003 DE 10314084
(43) Veröffentlichungstag der Anmeldung: 27.04.2005
(73) Patentinhaber: Emitec Gesellschaft für Emissionstechnologie mbH, 53797 Lohmar (DE)
(72) Erfinder: HODGSON, Jan, 53842 Troisdorf (DE); ALTHÖFER, Kait, 51674 Wiehl (DE); ROLLE, Arndt-Udo, 53721 Siegburg (DE)
(74) Vertreter: Kahlhöfer, Hermann
(86) Internationale Anmeldenummer: PCT/EP2003/007432
(87) Internationale Veröffentlichungsnummer: WO 2004/018851

(56) Entgegenhaltungen:
- EP-B- 0 855 936
- DE-A- 4 409 026
- US-A- 5 468 455
- PATENT ABSTRACTS OF JAPAN vol. 013, no. 042 (C-564), 30. Januar 1989 (1989-01-30) & JP 63 240952 A (TOYOTA MOTOR CORP), 6. Oktober 1988 (1988-10-06)

## Beschreibung

Die Erfindung betrifft eine strukturierte metallische Lage, die Bereiche unterschiedlicher Materialdicken aufweist, ein Verfahren zur Herstellung solcher metallischer Lagen, sowie einen Wabenkörper, der zumindest teilweise aus solchen metallischen Lagen aufgebaut ist.

Wabenkörper werden verbreitet eingesetzt, beispielsweise als Katalysatorträgerkörper zur Umsetzung von Abgasen von Verbrennungsmotoren, als Abgasfilter zur Herausfilterung von Partikeln im Abgasstrom von Verbrennungskraftmaschinen oder ähnlichem. Solche Wabenkörper sind beispielsweise aus der EP 0 245 737 B1 oder der EP 0 430 945 B1 bekannt. Die Erfindung lässt sich aber auch in anderen Bauformen, z. B. spiralig gewickelten Bauformen, verwirklichen. Auch sind in einer Richtung konische Bauformen zum Beispiel aus der WO 99/56010 bekannt. Die für Wabenkörper bekannten Herstellungsverfahren lassen sich auch für die vorliegende Erfindung anwenden. Neuere Entwicklungen betreffend die Zellgeometrie haben den Einsatz von Mikrostrukturen in den Kanalwänden hervorgebracht, wie sie beispielsweise aus der WO 90/08249 und WO 99/31362 bekannt sind. Solche Wabenkörper werden im Regelfall zumindest aus einer zumindest teilweise strukturierten metallischen Lage oder einer Mehrzahl von zumindest teilweise strukturierten und im wesentlichen glatten metallischen Lagen hergestellt und weisen oft für ein Fluid durchströmbare Hohlräume auf, die auch als Kanalsystem ausgebildet sein können.

Metallische Lagen können beispielsweise Blechlagen sein oder auch zumindest teilweise aus einem zumindest teilweise für ein Fluid durchlässigem Material ausgebildet sein.

Zur Herstellung eines Wabenkörpers werden unterschiedlich strukturierte metallische Lagen oder abwechselnd im wesentlichen glatte und zumindest teilweise strukturierten metallischen Lagen gestapelt und/oder zu einer Wabenstruktur gewickelt. Bei Verwendung von Blechlagen weisen diese typischerweise Dicken von weniger als 0,08 mm, insbesondere weniger als 0,04 mm oder sogar weniger als 0,025 mm auf. Die Wabenstruktur wird in ein Mantelrohr eingebracht.. Mit einem thermischen Fügeverfahren werden die metallischen Lagen der Wabenstruktur miteinander und die Wabenstruktur mit dem Mantelrohr verbunden. Hierbei finden oft Lötverfahren Anwendung. Es gibt verschiedene Möglichkeiten, Lot auf die zu verbindenden Bereiche der metallischen Lagen aufzutragen, unter anderem kann dies durch Auftragen eines Haftmittels auf die entsprechenden Bereiche der metallischen Lagen erfolgen, die daraufhin mit pulverförmigem Lot versehen werden, das an dem Haftmittel anhaftet. Beim Erhitzen der Strukturen verflüchtigt sich das Haftmittel, eine Lötverbindung entsteht in den gewünschten Bereichen. Bei der Auftragung des Haftmittels und/oder des Lots kann die durch das Aufeinanderliegen von Blechlagen entstehende Kapillarwirkung in engen Spalten ausgenutzt werden. Auch andere thermische Fügeverfahren, wie zum Beispiel das Ausbilden von Diffusionsanbindungen, sind anwendbar.

In Wabenkörpern ergibt sich bei manchen Bauformen das Problem, dass die metallischen Lagen, aus denen die Wabenkörper hergestellt werden, Bereiche mit unterschiedlichen Materialdicken aufweisen. So ist beispielsweise aus der EP 0 855 936 B1 ein aus Blechlagen aufgebauter Wabenkörper bekannt, der Verstärkungsstrukturen aufweist, die beispielsweise aus Umfalzungen der Ränder im Stimbereich des Wabenkörpers bestehen können. Durch das Umfalzen der Blechlagen im Stimbereich entstehen dort Bereiche, die eine deutlich vergrößerte Materialdicke im Vergleich zum Rest der Blechlagen aufweisen.

Diese Umfalzungen führen an ihren Grenzen zur Bildung von Hohlräumen, in denen bei einer Beschichtung der Blechlagen beispielsweise mit einem Washcoat sich dieser absetzt. Im Falle der Verwendung des Wabenkörpers als Katalysatorträgerkörper enthält der Washcoat unter anderem den Edelmetallkatalysator. Das heißt, durch das Füllen der Hohlräume mit Washcoat entsteht keine für das Abgas anströmbare katalytisch aktive Oberfläche, jedoch steigt der Verbrauch von Washcoat und Edelmetallkatalysatoren. Dies erhöht die Herstellungskosten des Katalysatorträgerkörpers.

Oftmals werden Wabenkörper vor Einbringen in ein Mantelrohr vorgespannt. Werden Blechlagen oder metallische Lagen mit umgefalzten Enden verwendet, so können diese nicht gleichmäßig vorgespannt werden, denn es bildet sich am axialen Rand eine Vorspannung aus, jedoch nicht im Mittelbereich der metallischen Lagen. Dies wirkt sich beispielsweise beim Diffusionslöten und anderen Verbindungstechniken negativ auf die Verbindung der metallischen Lagen aus.

Weiterhin werden entsprechend ausgebildete Wabenkörper auch als Partikelfilter eingesetzt. Bei diesen Partikelfiltern kann zumindest ein Teil der metallischen Lagen zumindest teilweise aus einem porösem Material, beispielsweise einem Fasermaterial ausgebildet sein. Bei der Verbindung dieser Filterlagen mit z. B. Blechlagen zur Verstärkung vor allem im Randbereich der Filterlagen entsteht auch hier eine metallische Lage, die Bereiche unterschiedlicher Materialdicke aufweist und die die oben genannten Nachteile beim Aufbau eines Wabenkörpers in Bezug auf die Vorspannung und die Verteilung von Haftmittel bzw. Lotmaterial aufweist.

Aus anderen technischen Gebieten sind metallische Wellstrukturen bekannt, die ebenfalls mit unterschiedlichen Dicken ausgeführt sind.

So betrifft die US -A- 5 468 455 einen elektrisch beheizbaren Wabenkörper, bei dem die Blechfolien stirnseitig mit einer keramischen, die Metallfolien voneinander elektrisch isolierenden, Halterung versehen sind.

Darüber hinaus sind metallische Wellstrukturen auch aus der Gebäudetechnik bekannt. Die US -A- 4 241 146 beschreibt ein solches Wellband zur Verstärkung von Gebäuden und Brücken. Dabei wird dort vorgeschlagen, die Bereiche der Wellenberge und Wellentäler durch Umfalzungen bzw. Plattierungen zu verstärken.

Hiervon ausgehend ist es Aufgabe der Erfindung, eine zumindest teilweise Strukturen aufweisende metallische Lage vorzuschlagen, die die oben dargelegten Probleme vermeiden hilft, sowie ein Verfahren zur Herstellung einer solchen metallischen Lage und einen Wabenkörper, der zumindest teilweise aus mindestens einer solchen metallischen Lage aufgebaut ist, anzugeben.

Diese Aufgabe wird gelöst durch ein Verfahren mit den Merkmalen des Anspruchs 1, eine Blechlage mit den Merkmalen des Anspruchs 12 und einen Wabenkörper mit den Merkmalen des Anspruchs 24. Vorteilhafte Weiterbildungen sind Gegenstand der jeweils abhängigen Ansprüche.

Bei dem erfindungsgemäßen Verfahren zum Herstellen einer zumindest in Teilbereichen Strukturen mit Wellentälern und Wellenbergen aufweisenden metallischen Lage mit einer zumindest teilweise aus den Wellenbergen gebildeten oberen Anlagefläche und einer zumindest teilweise aus den Wellentälern gebildeten unteren Anlagefläche, die zumindest einen ersten Bereich mit einer ersten Materialdicke und einen zweiten Bereich mit einer von der ersten Materialdicke verschiedenen zweiten Materialdicke aufweist, erfolgt das Ausbilden der Strukturen in Längsrichtung so, dass unabhängig von der jeweiligen Materialdicke beide Bereiche in Längsrichtung im Bereich der Wellenberge und der Wellentäler im wesentlichen fluchtende obere und untere Anlageflächen aufweisen.

Eine nach dem Verfahren hergestellte metallische Lage weist in den Bereichen, in denen sie beim Wickeln eines Wabenkörpers mit benachbarten metallischen Lagen aneinander liegt, eine fluchtende, insbesondere durchgängige obere und untere Anlagefläche auf. Hierbei wird die obere Anlagefläche zumindest teilweise, von der äußeren Fläche der Wellenberge und die untere Anlagefläche zumindest teilweise von der äußeren Fläche der Wellentäler gebildet. Beim Aufbau eines Wabenkörpers durch eine abwechselnde Stapelung von glatten und gewellten Blechlagen berühren sich benachbarte metallische Lagen im wesentlichen im Bereich der Anlageflächen, wobei die glatten metallischen Lagen an den jeweils äußeren Flächen der Wellentäler und Wellenberge anliegen. Eine im Bereich der Wellenberge und/oder der Wellentäler in Längsrichtung fluchtende Anlagefläche ohne Stufen wird dadurch erreicht, dass die Wellenberge in beiden Bereichen mit unterschiedlichen Materialdicken jeweils im wesentlichen die gleiche äußere Höhe aufweisen und die Wellentäler beider Bereiche mit unterschiedlichen Materialdicken jeweils im wesentlichen die gleiche äußere Tiefe aufweisen.

Dies gestattet unabhängig von der Materialdicke in den beiden Bereichen eine gleichmäßige Anlagefläche zur benachbarten metallischen Lage, so dass zum Beispiel bei einem Beloten nach bekannten Verfahren eine gleichmäßige Lot- oder Haftmittelverteilung erreicht wird, die nicht durch Unterbrechung der Kapillarwirkung beeinträchtigt wird. Auch die Bildung von gleichmäßig ausgebildeten Diffusionsanbindungen ist so möglich.

Gemäß einer vorteilhaften Ausgestaltung des Verfahrens ist der Bereich mit der kleineren Materialdicke zumindest teilweise strukturiert, während der andere Bereich im wesentlichen glatt ist.

Dies gestattet in vorteilhafter Weise die Ausbildung von metallischen Lagen mit im Bereich der Wellenberge und/oder der Wellentäler in Längsrichtung durchgehenden Anlageflächen, da der Dickenunterschied zwischen dem Bereich mit der größeren Materialdicke und dem Bereich mit der kleineren Materialdicke durch das Ausbilden von Strukturen in dem Bereich mit der kleineren Materialdicke ausgeglichen werden kann.

Gemäß einer vorteilhaften Ausgestaltung des Verfahrens weisen der erste Bereich und der zweite Bereich Strukturen auf. Dies ermöglicht beispielsweise den Aufbau von strukturierten Blechlagen mit Umfalzungen, die im Bereich der Wellenberge und/oder der Wellentäler fluchtende, insbesondere durchgehende Aüflageflächen aufweisen.

Gemäß einer weiteren vorteilhaften Ausgestaltung des Verfahrens ist zumindest einer der Bereiche aus einem zumindest teilweise für ein Fluid durchströmbaren Material, bevorzugt einem metallischen Fasermaterial, ausgebildet. Die Ausbildung von metallischen Lagen zumindest teilweise aus zumindest teilweise für ein Fluid durchströmbarem Material gestattet in vorteilhafter Weise den Aufbau von offenen Partikelfiltern.

Ein Partikelfilter wird dann als offen bezeichnet, wenn er grundsätzlich von Partikeln vollständig durchlaufen werden kann, und zwar auch von Partikeln, die erheblich größer als die eigentlich auszufilternden Partikel sind. Dadurch kann ein solcher Filter selbst bei einer Agglomeration von Partikeln während des Betriebes nicht verstopfen. Ein geeignetes Verfahren zur Messung der Offenheit eines Partikelfilters ist beispielsweise die Prüfung, bis zu welchem Durchmesser kugelförmige Partikel noch durch einen solchen Filter rieseln können. Bei vorliegenden Anwendungsfällen ist ein Filter insbesondere dann offen, wenn Kugeln von größer oder gleich 0,1 mm Durchmesser noch hindurchrieseln können, vorzugsweise Kugeln mit einem Durchmesser oberhalb von 0,2mm.

Gemäß einer weiteren vorteilhaften Ausgestaltung des Verfahrens erfolgt das Ausbilden der Strukturen zumindest teilweise durch Prägen. Besonders vorteilhaft ist in diesem Zusammenhang, dass das Ausbilden der Strukturen durch Wellen und anschließendes Prägen erfolgt. Auf diese Weise kann beispielsweise ein Wellen der metallischen. Lage in beiden Bereichen erfolgen, wobei dann in dem Bereich, der die dünnere Materialdicke aufweist, eine Anpassung der äußeren Höhe der Wellenberge und/oder der äußeren Tiefe der Wellentäler durch Prägen erfolgt. Dies ermöglicht die Ausbildung einer im Bereich der Wellenberge und/oder der Wellentäler in Längsrichtung durchgehenden oberen und/oder unteren Anlagefläche.

Gemäß einer weiteren vorteilhaften Ausgestaltung des Verfahrens erfolgt das Ausbilden der Strukturen durch gestuftes Wellen.

Gestuftes Wellen gestattet es in einfacher Weise, Strukturen so in die metallische Lage einzubringen, dass diese eine im Bereich der Wellenberge und/oder der Wellentäler im wesentlichen durchgehende obere und/oder untere Anlagefläche aufweisen. So kann beispielsweise bei Blechlagen mit Umfalzungen in mindestens einem der Endbereiche gewährleistet werden, dass eine im Bereich der Wellenberge und/oder der Wellentäler in Längsrichtung im wesentlichen durchgehende Anlagefläche ausgebildet wird.

Gemäß einer weiteren vorteilhaften Ausgestaltung des Verfahrens werden durch das Wellen Sinus-, Rechteck- und/oder Dreieckswellen ausgebildet. Insbesondere ist es möglich, durch unterschiedliche Zellformen in verschiedenen Bereichen Dickenunterschiede auszugleichen.

Diese Wellformen gestatten es in vorteilhafter Weise; metallische Lagen auszubilden, aus denen eine Vielzahl verschiedener Wabenkörper mit unterschiedlichen Zellformen und/oder -dichten aufgebaut werden kann.

Verfahren nach einem der vorhergehenden Ansprüche, dadurch gekennzeichnet, dass der erste Bereich und der zweite Bereich einander in einem Überlappungsbereich zumindest teilweise überlappen. Bevorzugt ist in diesem Zusammenhang, dass der erste Bereich und der zweite Bereich in dem Überlappungsbereich fügetechnisch miteinander verbunden werden, bevorzugt durch thermische Fügeverfahren, insbesondere Schweißen und/oder Löten, und/oder mechanische Fügeverfahren, insbesondere Nieten.

Dies ermöglicht in vorteilhafter Weise die Verbindung der beiden Bereiche, wenn diese nicht nur unterschiedliche Materialdicken aufweisen, sondern auch zusätzlich aus unterschiedlichen Materialien bestehen. Beispielsweise ist es so auf einfache Art und Weise möglich, ein Fasermaterial als ersten Bereich mit einer Blechfolie als zweiten Bereich zu verbinden.

Beispielsweise ist es erfindungsgemäß möglich, einer Fasermatte aus einem zumindest teilweise für ein Fluid durchlässigem Material mit einer Blechfolie durch ein thermisches Fügeverfahren zu einer metallischen Lage zu verbinden. Dies kann beispielsweise durch Ausbildung einer Lotverbindung oder auch einer Schweißverbindung erfolgen. Ein solches mechanisches Fügeverfahren kann auch in vorteilhafter Weise mit einem thermischen Fügeverfahren kombiniert werden, so dass die beiden Bereich sowohl durch ein thermisches, als auch durch ein mechanisches Fügeverfahren miteinander verbunden sind.

Gemäß einem weiteren Aspekt der Erfindung wird eine metallische Lage vorgeschlagen, die zumindest in Teilbereichen Strukturen mit Wellenbergen und Wellentälern aufweist, insbesondere zum Aufbau eines Wabenkörpers, wobei die Wellenberge zumindest teilweise eine obere Anlagefläche und die Wellentäler zumindest teilweise eine untere Anlagefläche bilden und die Blechlage mindestens einen ersten Bereich mit einer ersten Materialdicke und einen zweiten Bereich mit einer von der ersten Materialdicke verschiedenen zweiten Materialdicke aufweist. Bei der erfindungsgemäßen metallischen Lage sind die Strukturen so ausgebildet ist, dass unabhängig von der jeweiligen Materialdicke beide Bereiche im Bereich der Wellenberge und der Wellentäler in Längsrichtung im wesentlichen durchgehende obere Anlageflächen und untere Anlageflächen aufweisen.

Eine erfindungsgemäße metallische Lage weist in vorteilhafter Weise in Längsrichtung im Bereich der Wellenberge und/oder der Wellentäler im wesentlichen durchgehende Anlageflächen auf, so dass beim Aufbau eines Wabenkörpers zumindest teilweise aus solchen metallischen Lagen eine gleichmässige Anlagefläche zu benachbarten metallischen Lagen erreicht wird.

Dies ermöglicht eine Verbindung benachbarter metallischer Lagen beispielsweise durch Löten, wobei die Verbindungsstellen gleichmässig ausgebildet sind. Zudem ist das Ausbilden eines Wabenkörpers unter gleichmässiger Vorspannung möglich.

Gemäß einer vorteilhaften Ausgestaltung der metallischen Lage ist der Bereich mit der kleineren Materialdicke zumindest teilweise strukturiert, während der andere Bereich im wesentlichen glatt ist.

Hierdurch kann in vorteilhafter Weise die Strukturierung in dem dünneren Bereich der metallischen Lage zum Ausgleich des Dickenunterschiedes zum dickeren, im wesentlichen unstrukturierten Bereich verwendet werden.

Gemäß einer weiteren vorteilhaften Ausgestaltung der metallischen Lage weisen der erste Bereich und der zweite Bereich Strukturen auf. Auf diese Weise können strukturierte metallische Lagen mit Bereichen unterschiedlicher Dicke ausgebildet werden.

Gemäß einer weiteren vorteilhaften Ausgestaltung der metallischen Lage ist die Blechlage in zumindest einem stirnseitigen Endbereich umgefalzt.

Eine solche Umfalzung kann vorteilhafterweise zur Verstärkung der metallischen Lage dienen. Die Ausbildung einer Verstärküngsstruktur besonders in einem stirnseitigen Endbereich dient als mechanischer Schutz zum Beispiel auf der Gaseintrittseite eines Wabenkörpers im Abgasstrang einer Verbrennungskraftmaschine. Abgasströme sind oft pulsierend und bewirken zudem eine hohe thermische Belastung des Wabenkörpers, vor allem der Gaseintrittsseite. Bei einem Wabenkörper aus erfindungsgemäßen metallischen Lagen ist das Ausbilden im Bereich der Wellenberge und/oder der Wellentäler durchgehender Anlageflächen mit benachbarten Blechlagen besonders vorteilhaft, da es sonst zu einer ungleichmäßigen Vorspannung über die axiale Länge des Wabenkörpers kommen würde.

Gemäß einer weiteren vorteilhaften Ausgestaltung der metallischen Lage ist zumindest einer der Bereiche aus einem zumindest teilweise für ein Fluid durchströmbaren Material, bevorzugt einem metallischen Fasermaterial, ausgebildet.

Hierbei ist es möglich, sowohl Metallfasern, speziell auch gesinterte Metallfasern, als auch andere Fasermaterialien zu verwenden. Solche Fasermaterialien werden bei Partikelfiltern zur Filterung der Abgase von Verbrennungsmotoren eingesetzt, beispielsweise bei der Filterung von Rußpartikeln im Abgas von Dieselmotoren. Diese Fasermaterialien können vorteilhafterweise z. B. mit Blechfolien verstärkt werden. Dadurch lassen sich auf einfache Art und Weise Partikelfilter zumindest teilweise aus metallischen Lagen aus Fasermaterialien und anderen Blechen herstellen.

Gemäß einer weitem vorteilhaften Ausgestaltung der metallischen Lage überlappen der erste Bereich und der zweite Bereich einander zumindest teilweise in einem Überlappungsbereich.

Dies ermöglicht in vorteilhafter Weise die Verbindung der beiden Bereiche, wenn diese nicht nur unterschiedliche Materialdicken aufweisen, sondern auch zusätzlich aus unterschiedlichen Materialien bestehen. Beispielsweise ist es so auf einfache Art und Weise möglich, eine Fasermaterial als ersten Bereich mit einer Blechfolie als zweitem Bereich zu verbinden.

Gemäß einer weiteren vorteilhaften Ausgestaltung der metallischen Lage sind die Bereiche im Überlappungsbereich durch ein thermisches Fügeverfahren, bevorzugt Schweißen, insbesondere Rollnahtschweißen, und/oder Löten miteinander verbunden.

Beispielsweise ist es erfindungsgemäß möglich, eine Fasermatte mit einer Blechfolie durch ein thermisches Fügeverfahren zu verbinden. Dies kann beispielsweise durch Ausbildung einer Lotverbindung oder auch einer Schweißverbindung erfolgen. Rollnahtschweißen hat sich in diesem Zusammenhang als vorteilhaft herausgestellt, da gleichzeitig mit dem Ausbilden der Schweißverbindung noch eine Kompression der Fasermatte erfolgt. Dies kann bei entsprechender Verfahrensführung im Überlappungsbereich die Ausbildung einer im Bereich der Wellenberge und/oder der Wellentäler in Längsrichtung im wesentlichen durchgehenden oberen und/oder unteren Anlagefläche vereinfachen.

Gemäß einer weiteren vorteilhaften Ausgestaltung der metallische Lage sind die Bereiche im Überlappungsbereich durch ein mechanisches Fügeverfahren, bevorzugt Nieten, miteinander verbunden.

Ein solches mechanisches Fügeverfahren kann auch in vorteilhafter Weise mit einem thermischen Fügeverfahren kombiniert werden, so dass die beiden Bereich sowohl durch ein thermisches, als auch durch ein mechanisches Fügeverfahren miteinander verbunden sind. So kann beispielsweise durch Nieten eine Art Vorfixierung erfolgen, an die sich ein Lot- oder Schweißverfahren anschließt.

Gemäß einer weiteren vorteilhaften Ausgestaltung der metallischen Lage sind die Strukturen zumindest teilweise geprägt. Besonders vorteilhaft ist in diesem Zusammenhang, dass die Strukturen durch Wellen und anschließendes Prägen ausgebildet sind.

Gemäß einer weitem vorteilhaften Ausgestaltung der metallischen Lage sind die Strukturen durch gestuftes Wellen ausgebildet. Gestuftes Wellen gestattet es in vorteilhafter Weise, metallische Lagen auszubilden, die im Bereich der Wellenberge und/oder der Wellentäler eine in Längsrichtung im wesentlichen durchgehende obere und/oder untere Anlagefläche aufweisen.

Gemäß einer weiteren vorteilhaften Ausgestaltung der metallischen Lage sind die Wellen Sinus-, Dreiecks- und/oder Rechteckwellen: Unterschiedliche Wellformen in unterschiedlichen Bereichen können dabei auch zum Ausgleich unterschiedlicher Materialdicken eingesetzt werden.

Die Ausbildung von Sinus-, Dreiecks- und/oder Rechteckwellen gestattet in vorteilhafter Weise beim Aufbau entsprechender Wabenkörper eine Vielzahl von unterschiedlichen Hohlraumgeometrien und Zelldichten des Wabenkörpers. Die Ausbildung von Rechteckwellen ist in diesem Verfahren besonders vorteilhaft, da die gleiche Wellform mit identischer Wellamplitude und Wellenlänge beibehalten werden kann, es kommt lediglich zur sprunghaften Änderung der Nulllage der Wellen am Übergang vom ersten Bereich zum zweiten Bereich. Dies lässt sich auf einfache Weise bei der Gestaltung der Strukturierwerkzeuge realisieren.

Gemäß einem weiteren Aspekt des erfinderischen Gedankens wird ein Wabenkörper vorgeschlagen, der zumindest teilweise aus metallischen Lagen aufgebaut ist, die nach dem erfindungsgemäßen Verfahren hergestellt worden sind, oder zumindest teilweise aus erfindungsgemäßen metallischen Lagen aufgebaut ist.

Alle für das erfindungsgemäße Verfahren beschriebenen Vorteile gelten in gleicher Weise für eine erfindungsgemäße metallische Lage und einen erfindungsgemäßen Wabenkörper und umgekehrt.

Weitere Ausgestaltungen und Vorteile der Erfindung werden im folgenden anhand der Zeichnung näher erläutert. Jedoch ist die Erfindung nicht auf die dort gezeigten Ausfiihrungsbeispiele beschränkt. Es zeigen:
- Fig. 1: eine erfindungsgemäße strukturierte metallische Lage;
- Fig. 2: eine zumindest teilweise aus erfindungsgemäßen strukturierten Blechlagen aufgebaute Wabenstruktur;
- Fig. 3: einen axialen Schnitt durch eine erfindungsgemäße strukturierte Blechlage;
- Fig.4: einen axialen Schnitt durch ein weiteres Ausführungsbeispiel einer erfindungsgemäßen strukturierten Blechlage; und
- Fig. 5: schematisch eine perspektivische Ansicht einer teilweise strukturierten erfindungsgemäßen metallischen Lage.

Beim Aufbau eines Wabenkörpers mit aus dem Stand der Technik bekannten Blechlagen mit Umfalzungen an den Stirnseiten der Blechlagen ergeben sich mehrere Effekte.

Erstens bildet sich, falls der Wabenkörper unter Vorspannung hergestellt wird, diese in axialer Richtung ungleichmäßig aus. Dies führt zu einer ungleichmäßigen Verteilung des Lots durch die axial ungleichmäßige Kapillarwirkung bei einer Belotung nach herkömmlichen Verfahren. Auch zum Beispiel beim Ausbilden von Diffusionsanbindungen ergibt sich ebenfalls eine ungleichmäßige Anbindung der Blechlagen.

Zweitens kommt es regelmäßig bei der Beschichtung dieser Blechlagen mit Washcoat dazu, dass sich in den Umfalzspalten Washcoat mit Edelmetallkatalysator einlagert. Dieser trägt jedoch nicht zur Vergrößerung der Oberfläche, die von einem Abgas angeströmt werden kann, bei. Insofern tragen die Edelmetallkatalysatoren in den Umfalzspalten auch nicht zur Steigerung der Effektivität der katalytischen Umsetzung bei. Folglich ist dieser Washcoat mit eingelagerten Edelmetallkatalysatoren im Bereich der Umfalzspalten als Verlust anzusehen.

Zumindest der erste Nachteil tritt generell dann auf, wenn ein Wabenkörper zumindest teilweise aus metallischen Lagen mit Bereichen unterschiedlicher Dicke aufgebaut wird.

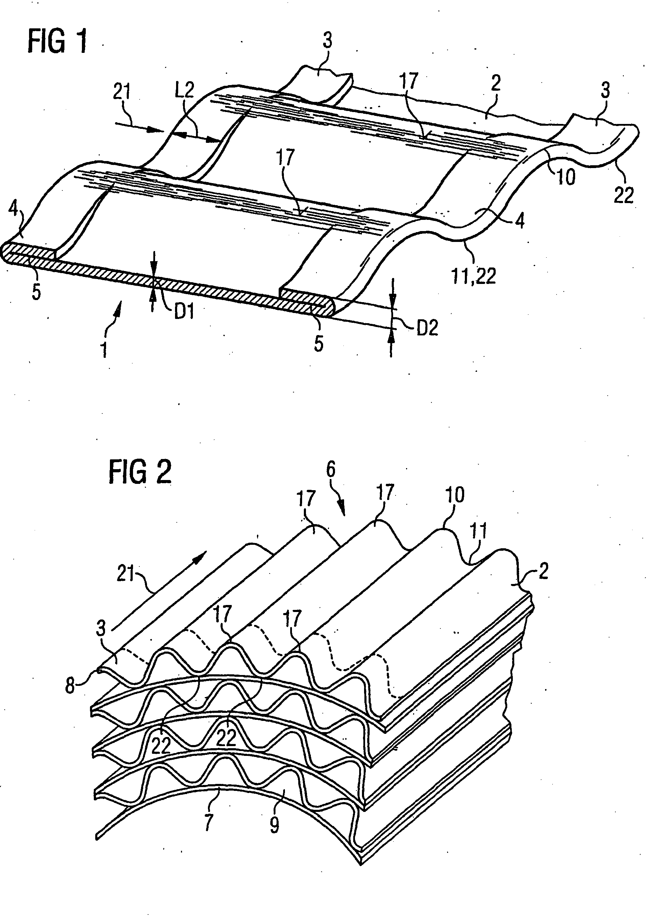

Diese Effekte werden durch die Verwendung erfindungsgemäßer strukturierter metallischer Lagen überwunden. Fig. 1 zeigt eine erfindungsgemäße strukturierte metallische Lage 1, die einen ersten Bereich 2 mit einer Dicke D1 und zwei zweite Bereiche 3 mit einer jeweiligen Dicke D2 aufweist. Die metallische Lage 1 ist in diesem Beispiel eine Blechlage. Die zweiten Bereiche 3 werden durch Ausbilden von Umfalzungen 4 einer Länge L2 an der Stirnseite der metallischen Lage 1 gebildet. Die strukturierte metallische Lage 1 weist eine wellenartige Struktur mit Wellentälern 11 und Wellenbergen 10 auf. Im Bereich der Wellentäler 11 und der Wellenberge 10 ist die Strukturierung so ausgebildet, dass sich beim Übergang von ersten Bereich 2 zum zweiten Bereich 3 die Struktur so ändert, dass der erste Bereich 2 und der zweite Bereich 3 in einem Wellental 11 jeweils eine identische äußere Tiefe und in einem Wellenberg 10 jeweils eine identische äußere Höhe haben. Dies führt zu einer im Bereich der Wellenberge 10 in Längsrichtung 21 durchgehenden oberen Anlagefläche 17, die in vorliegendem Beispiel aus den äußeren Flächen der Wellenberge 10, und zu einer im Bereich der Wellentäler 11 in Längsrichtung 21 durchgehenden unteren Anlagefläche 22, die in vorliegendem Beispiel aus den äußeren Flächen der Wellentäler 11 gebildet ist. Die obere Anlagefläche 17 und die untere Anlagefläche 22 liegen beim Aufbau eines Wabenkörpers zumindest teilweise aus solchen metallischen Lagen 1 an benachbarten metallischen Lagen an. Eine durchgängige Anlagefläche 17, 22 führt zu einer in Längsrichtung 21 gleichmäßigen Vörspannung, die bei einer Belotung mit herkömmlichen Verfahren zu einer gleichmäßigen Lotverteilung führen.

Figur 2 zeigt eine Wabenstruktur 6, die aus glatten Blechlagen 7 und erfindungsgemäßen strukturierten metallischen Lagen, die als Blechlagen 8 ausgebildet sind, aufgebaut ist. Die glatten Blechlagen 7 und die strukturierten Blechlagen 8 sind abwechselnd aufeinander gestapelt, so dass sich für einen Fluid durchströmbare Kanäle 9 bilden. Jede der erfindungsgemäßen strukturierten Blechlagen 8 weist Wellenberge 10 und Wellentäler 11 auf, wobei die Wellenberge 10 eine obere Anlagefläche 17 und die Wellentäler 11 eine untere Anlagefläche 22 bilden. In Längsrichtung 21 weist die strukturierte Blechlage 8 einen ersten Bereich 2 und einen zweiten Bereich 3 auf, die unterschiedliche Materialdicken aufweisen. Im Aufbau der Wabenstruktur 6 ist zu erkennen, dass die Anlagefläche 17, 22 zwischen einer glatten Blechlage 7 und einer strukturierten Blechlage 8 immer aus einem Wellenberg 10 oder einem Wellental 11 besteht. Die glatte Blechlage 7 liegt jeweils auf der äußeren Fläche der strukturierten Blechlage 8 auf, also der äußeren Fläche des Wellenbergs 10 oder des Wellentals 11.

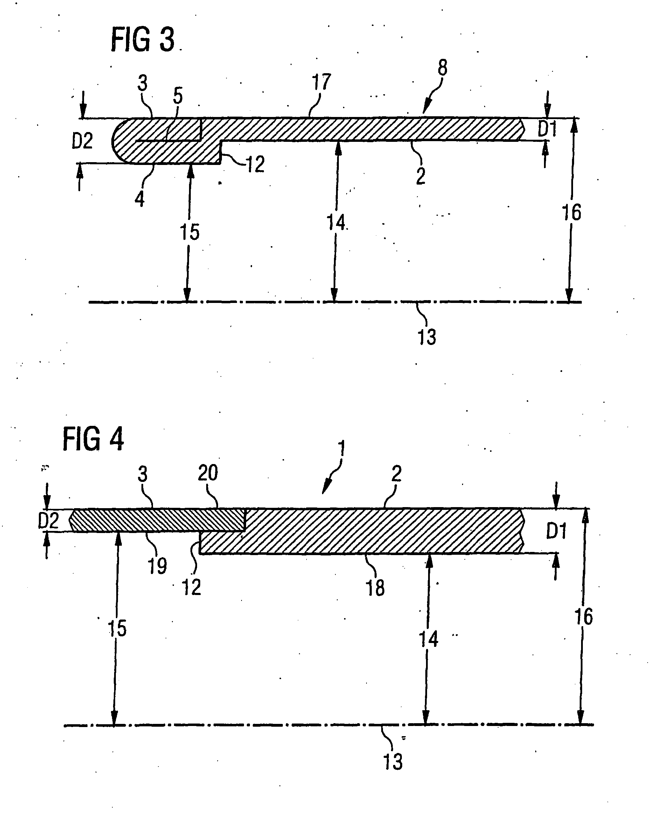

Figur 3 zeigt einen Schnitt durch eine erfindungsgemäß strukturierte Blechlage 8 in einem Wellenberg 10. Der Schnitt verläuft in Längsrichtung 21. Zu erkennen ist die strukturierte Blechlage 8, die einen ersten Bereich 2 einer Dicke D1 und einen zweiten Bereich 3 einer Dicke D2 aufweist. Der zweite Bereich 3 ist durch eine Umfalzung 4 gebildet, so dass die Dicke D2 des zweiten Bereichs 3 größer ist als die Dicke D1 des ersten Bereichs 2.

Beim Strukturieren der strukturierten Blechlage 8 wurde eine Stufe 12 ausgebildet, beispielsweise ein gestuftes Wellverfahren angewendet. Diese Stufe 12 führt zu einer Höhenvergleichmäßigung der Struktur. Die Strukturierung ist so erfolgt, dass im ersten Bereich 2 die Struktur relativ zum Nulldurchgang 13 der Welle eine erste innere Höhe 14 aufweist, während die zweite innere Höhe 15 im Bereich des zweiten Bereichs 3 kleiner ist als die erste innere Höhe 14. Jedoch ist sowohl im ersten Bereich 2, als auch im zweiten Bereich 3 die äußere Höhe 16 identisch. Die durch den Wellenberg 10 der äußeren Höhe 16 gebildete obere Anlagefläche 17 zu einem gegebenenfalls benachbarten glatten Blech 7 ist deshalb stufenlos ausgebildet. Demzufolge kommt es beim Aufbau eines Wabenkörpers 6 zu einer flächigen Verbindung des strukturierten Blechs 8 mit einem benachbarten glatten Blech 7, beispielsweise durch Ausbildung einer Lötverbindung. Ein weiterer Vorteil der erfindungsgemäßen Blechlage ist die Tatsache, dass die Umfalzspalte 5 weitestgehend geschlossen ist, so dass es beim Beschichten der strukturierten Blechlage 8 mit Washcoat zu einer deutlich verringerten Einlagerung von Washcoat in der Umfalzspalte 5 kommt.

Weiterhin ist es erfindungsgemäß möglich, die Umfalzung 4, also den zweiten Bereich 3, mittels einer thermischen Fügeverbindung zu stabilisieren. Hier bietet es sich vor allem an, den zweiten Bereich 3 in der Umfalzspalte 5 zu verlöten, oder aber eine Schweißnaht anzubringen, die beispielsweise durch ein Rollnahtschweißverfahren oder auch ein Laserschweißverfahren ausgebildet werden kann. Erfindungsgemäß ist es gleichfalls möglich, eine mechanische Fügeverbindung oder auch die Kombination einer mechanischen Fügeverbindung, z. B. Nieten, mit einer thermischen Fügeverbindung im Bereich der Umfalzung auszubilden. Vorteilhafterweise kann so zum Beispiel durch Nieten eine erste Fixierung durchgeführt werden, woran anschließend ein thermisches Fügeverfahren durchgeführt wird. So kann die Nietverbindung als eine Art Vorfixierung genutzt werden, die durch Ausbildung der thermischen Fügeverbindung weiter verstärkt wird.

Die Strukturen der erfindungsgemäßen strukturierten Blechlage 8 können auch durch Ausbilden einer Vorwellung mit anschließendem Prägen erzeugt werden, so dass beispielsweise der erste Bereich 2 nachgeprägt wird, um den Wellenberg 10 mit gleicher äußeres Höhe 16 im ersten Bereich 2 und im zweiten Bereich 3 auszubilden.

Figur 4 zeigt einen entsprechenden axialen Schnitt im Wellenberg 10 durch ein weiteres Ausführungsbeispiel einer erfindungsgemäß strukturierten metallischen Lage 1. Die strukturierte metallische Lage 1 setzt sich aus einer Filterlage 18 und einer Blechfolie 19 zusammen. Hierbei bildet die Filterlage 18 den ersten Bereich 2 und die Blechfolie 19 den zweiten Bereich 3. Die Filterlage 18 ist eine Filtermatte aus einem zumindest teilweise für ein Fluid durchströmbaren Material. Der erste Bereich 2 weist eine Dicke D1 auf, während der zweite Bereich 3 eine Dicke D2 aufweist. In diesem Ausführungsbeispiel ist die Dicke D1 größer als die Dicke D2. Auch diese metallische Lage 1 wurde strukturiert und in einem Wellenberg 10 in Längsrichtung 21 geschnitten. Die Filterlage 18 ist porös und kann beispielsweise in radialer Richtung von Gas durchströmt werden. In Bezug auf die Nulllinie 13 der aufgeprägten Wellung weisen die beiden Bereiche 2 und 3 unterschiedliche innere Höhen 14, 15 in Bezug auf den Nulldurchgang der Wellung 13, jedoch eine gemeinsame äußere Höhe 16 auf. Der erste Bereich 2 und der zweite Bereich 3 überlappen sich in einem Überlappungsbereich 20. In diesem Überlappungsbereich 20 ist eine fügetechnische Verbindung zwischen der Filterlage 18 und der Blechfolie 19 ausgebildet. Diese fügetechnische Verbindung kann beispielsweise durch ein Schweißverfahren, bevorzugt ein Widerstandsschweiß- oder Laserschweißverfahren hergestellt werden. Besonders vorteilhaft ist in diesem Zusammenhang die Anwendung eines Rollnahtschweißverfahrens, da der Anpressdruck beim Rollnahtschweißen dazu benutzt werden kann, die Filterlage 18 zu komprimieren, um den Dickenunterschied zwischen der Filterlage 18 und der Blechfolie 19 auszugleichen. Das Resultat eines solchen Rollnahtschweißverfahrens ist eine feste Verbindung zwischen der Filterlage 18 und der Blechfolie 19. Auch bei der Verbindung einer Blechfolie 19 mit einer Filterlage 18 kann im Überlappungsbereich 20 in vorteilhafter Weise alternativ oder zusätzlich zu einer thermischen Fügeverbindung eine mechanische Fügeverbindung ausgebildet werden.

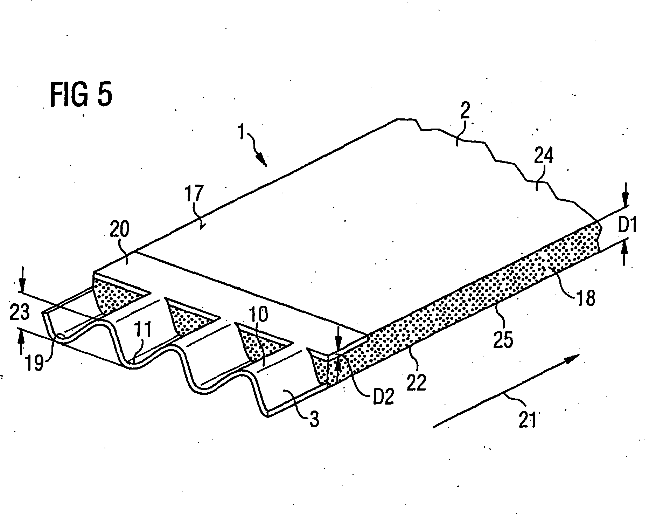

Figur 5 zeigt schematisch eine perspektivische Ansicht einer erfindungsgemäßen metallischen Lage 1. Diese weist einen ersten Bereich 2 auf, der aus einer Filterlage 18 beispielsweise aus einem metallischen Fasermaterial gebildet ist. Der erste Bereich 2 weist eine Dicke D1 auf. Weiterhin ist ein zweiter Bereich 3 aus einer Blechfolie 19 ausgebildet, deren Dicke D2 deutlich geringer ist als die Dicke D1 des ersten Bereichs 2. Erster Bereich 2 und zweiter Bereich 3 überlappen einander im Überlappungsbereich 20. In diesem sind die Blechfolie 19 und die Filterlage 18 fügetechnisch miteinander verbunden, beispielsweise rollnahtgeschweißt. Die Blechfolie 19 ist in dem Bereich strukturiert, der nicht Teil des Überlappungsbereichs 20 ist. Die Struktur ist mit Wellenbergen 10 und Wellentälern 11 so ausgebildet, dass der Abstand 23 zwischen der Außenfläche der Wellenberge 10 und der Außenfläche der Wellentäler 11 genau der Dicke, D1 entspricht. Dies führt zur Ausbildung einer oberen Anlagefläche 17, die die Oberseite 24 der Faserlage 18, die Oberseite des Überlappungsbereichs 20 und die Außenflächen der Wellenberge 10 umfasst. So wird im Bereich der Wellenberge 10 eine obere Anlagefläche 17 ausgebildet, die in Längsrichtung 21 durchgehend ist, also keine Sprünge aufweist. Gleichermaßen wird eine untere Anlagefläche 22 gebildet, die die Unterseite 25 und die Außenflächen der Wellentäler 11 umfasst und die in Längsrichtung 21 im wesentlichen durchgehend ist.

Durch die Ausbildung von Strukturen mit Wellenbergen 10 und Wellentälern 11 in einem zweiten Bereich 3 kann so in vorteilhafter Weise der Dickenunterschied zwischen der Dicke D2 der Faserlage 18 und der Dicke D1 der Blechfolie 19 ausgeglichen werden. Das Ausbilden der Strukturen im zweiten Bereich 3 kann in vorteilhafter Weise durch Wellen oder auch Wellen und anschließendes Prägen erfolgen. Falls die Filterlage 18 auch Strukturen aufweist, so ist auch ein gestuftes Wellverfahren zum Ausbilden der Strukturen möglich.

Das erfindungsgemäße Verfahren und die erfindungsgemäße metallische Lage 1, 8 ermöglichen in vorteilhafter Weise den Aufbau von Wabenstrukturen 6, bei denen die metallische Lagen 1, 8 trotz der Ausbildung von zwei Bereichen 2, 3 unterschiedlicher Dicke D1, D2 über im Bereich der Wellenberge 10 und oder der Wellentäler 11 in axialer Richtung im wesentlichen durchgehende Anlageflächen 17, 22 mit benachbarten metallischen Lagen verbunden sind. So ist der Aufbau von Wabenstrukturen 6 zumindest teilweise aus metallischen Lagen 1, 8 unter im wesentlichen gleichmäßiger Vorspannung möglich.

### Bezugszeichenliste

- 1: metallische Lage
- 2: erster Bereich
- 3: zweiter Bereich
- 4: Umfalzung
- 5: Umfalzspalte
- 6: Wabenstruktur
- 7: glatte Blechlage
- 8: strukturierte Blechlage
- 9: Kanal
- 10: Wellenberg
- 11: Wellental
- 12: Stufe
- 13: Nulldurchgang
- 14: erste innere Höhe
- 15: zweite innere Höhe
- 16: äußere Höhe
- 17: obere Anlagefläche
- 18: Filterlage
- 19: Blechfolie
- 20: Überlappungsbereich
- 21: Längsrichtung
- 22: untere Anlagefläche
- 23: Abstand
- 24: Oberseite
- 25: Unterseite

- D 1: Dicke des ersten Bereichs
- D2: Dicke des zweiten Bereichs
- L2: Länge des zweiten Bereichs

## Patentansprüche

1. Verfahren zum Herstellen einer zumindest in Teilbereichen Strukturen mit Wellentälern (11) und Wellenbergen (10) aufweisenden metallischen Lage (8) mit einer zumindest teilweise aus den Wellenbergen (10) gebildeten oberen Anlagefläche (17) und einer zumindest teilweise aus den Wellentälern (11) gebildeten unteren Anlagefläche (22), wobei die metallische Lage (8) in längsrichtung (21) der Wellenberge (10) und der Wellentäten (11) zumindest einen ersten Bereich (2) mit einer ersten Materialdicke (D1) und einen zweiten Bereich (3) mit einer von der ersten Materialdicke (D1) verschiedenen zweiten Materialdicke (D2) aufweist, **dadurch gekennzeichnet, dass** das Ausbilden der Strukturen in Längsrichtung so erfolgt, dass a) unabhängig von der jeweiligen Materialdicke (D1, D2) beide Bereiche (2, 3) im Bereich der Wellenberge (10) in Längsrichtung (21) fluchtende obere Anlageflächen (17) aufweisen, und dass b) unabhängig von der jeweiligen Materialdicke (D1, D2) beide Bereiche (2, 3) im Bereich der Wellentäler (11) in Längsrichtung (21) im wesentlichen fluchtende untere Anlageflächen (22) aufweisen.

2. Verfahren nach Anspruch 1, **dadurch gekennzeichnet, dass** der Bereich (3) mit der kleineren Materialdicke (D2) zumindest teilweise strukturiert ist, während der andere Bereich (2) im wesentlichen glatt ist.

3. Verfahren nach Anspruch 1, **dadurch gekennzeichnet, dass** der erste Bereich (2) und der zweite Bereich (3) Strukturen aufweisen.

4. Verfahren nach einem der vorhergehenden Ansprüche, **dadurch gekennzeichnet, dass** zumindest einer der Bereiche (2) aus einem zumindest teilweise für ein Fluid durchlässigem Material, bevorzugt einem metallischen Fasermaterial, ausgebildet ist.

5. Verfahren nach einem der vorhergehenden Ansprüche, **dadurch gekennzeichnet, dass** die metallische Lage (8) in zumindest einem Bereich (2, 3) umgefalzt ist.

6. Verfahren nach einem der Ansprüche 1 bis 5, **dadurch gekennzeichnet, dass** das Ausbilden der Strukturen zumindest teilweise durch Prägen erfolgt.

7. Verfahren nach Anspruch 6, **dadurch gekennzeichnet, dass** das Ausbilden der Strukturen durch Wellen und anschließendes Prägen erfolgt.

8. Verfahren nach einem der Ansprüche 1 bis 5, **dadurch gekennzeichnet, dass** das Ausbilden der Strukturen durch gestuftes Wellen erfolgt.

9. Verfahren nach einem der Ansprüche 7 oder 8, **dadurch gekennzeichnet, dass** durch das Wellen Sinus-, Rechteck- und/oder Dreieckswellen ausgebildet werden, insbesondere unterschiedliche Formen im ersten Bereich (2) und im zweiten Bereich (3).

10. Verfahren nach einem der vorhergehenden Ansprüche, **dadurch gekennzeichnet, dass** der erste Bereich (2) und der zweite Bereich (3) einander in einem Überlappungsbereich (20) zumindest teilweise überlappen.

11. Verfahren nach Anspruch 10, **dadurch gekennzeichnet, dass** der erste Bereich (2) und der zweite Bereich (3) in dem Überlappungsbereich (20) fügetechnisch miteinander verbunden werden, bevorzugt durch thermische Fügeverfahren, insbesondere Schweißen und/oder Löten, und/oder mechanische Fügeverfahren, insbesondere Nieten.

12. Metallische Lage, die zumindest in Teilbereichen Strukturen mit Wellenbergen (10) und Wellentälern (11) aufweist, insbesondere zum Aufbau eines Wabenkörpers (6), wobei die Wellenberge (10) zumindest teilweise eine obere Anlagefläche (17) und die Wellentäler (11) zumindest teilweise eine untere Anlagefläche (22) bilden und die metallische Lage (8) in Längsrichtung (21) der Wellenberge und der Wellentäler (11) mindestens einen ersten Bereich (2) mit einer ersten Materialdicke (D1) und einen zweiten Bereich (3) mit einer von der ersten Materialdicke (D1) verschiedenen zweiten Materialdicke (D2) aufweist, **dadurch gekennzeichnet, dass** die Strukturen so ausgebildet sind, dass a) unabhängig von der jeweiligen Materialdicke (D1, D2) beide Bereiche (2, 3) im Bereich der Wellenberge (10) in Längsrichtung (21) fluchtende obere Anlageflächen (17) aufweisen, und dass b) unabhängig von der jeweiligen Materialdicke (D1, D2) beide Bereiche (2, 3) im Bereich der Wellentäler (11) in Längsrichtung (21) im wesentlichen fluchtende untere Anlageflächen (22) aufweisen.

13. Metallische Lage nach Anspruch 12, **dadurch gekennzeichnet, dass** der Bereich (3) mit der kleineren Materialdicke (D2) zumindest teilweise strukturiert ist, während der andere Bereich (2) im wesentlichen glatt ist.

14. Metallische Lage nach Anspruch 12, **dadurch gekennzeichnet, dass** der erste Bereich (2) und der zweite Bereich (3) Strukturen aufweisen.

15. Metallische Lage nach einem der Ansprüche 12 bis 14, **dadurch gekennzeichnet, dass** die Blechlage (8) in zumindest einem stirnseitigen Endbereich umgefalzt ist.

16. Metallische Lage nach einem der Ansprüche 12 bis 15, **dadurch gekennzeichnet, dass** zumindest einer der Bereiche (2, 3) aus einem zumindest teilweise für ein Fluid durchströmbaren Material, bevorzugt einem metallischen Fasermaterial, ausgebildet ist.

17. Metallische Lage nach einem der Ansprüche 12 bis 16, **dadurch gekennzeichnet, dass** der erste Bereich (2) und der zweite Bereich (3) einander in einem Überlappungsbereich (20) zumindest teilweise überlappen.

18. Metallische Lage nach Anspruch 17, **dadurch gekennzeichnet, dass** die Bereiche (2, 3) im Überlappungsbereich (20) durch ein thermisches Fügeverfahren bevorzugt Schweißen, insbesondere Rollnahtschweißen, und/oder Löten miteinander verbunden sind.

19. Metallische Lage nach Anspruch 17 oder 18, **dadurch gekennzeichnet, dass** die Bereiche (2, 3) im Überlappungsbereich (20) durch ein mechanisches Fügeverfahren, bevorzugt Nieten, miteinander verbunden sind.

20. Metallische Lage nach einem der Ansprüche 12 bis 19, **dadurch gekennzeichnet, dass** die Strukturen zumindest teilweise geprägt sind.

21. Metallische Lage nach Anspruch 20, **dadurch gekennzeichnet, dass** die Strukturen durch Wellen und anschließendes Prägen ausgebildet sind.

22. Metallische Lage nach einem der Ansprüche 12 bis 19, **dadurch gekennzeichnet, dass** die Strukturen durch gestuftes Wellen ausgebildet sind.

23. Metallische Lage nach Anspruch 21 oder 22, **dadurch gekennzeichnet, dass** die Wellen Sinus-, Dreiecks und/oder Rechteckwellen sind, insbesondere unterschiedliche Strukturen im ersten Bereich (2) und im zweiten Bereich (3).

24. Wabenkörper, zumindest teilweise aufgebaut aus metallischen Lagen (8), die nach dem Verfahren nach einem der Ansprüche 1 bis 11 hergestellt worden sind oder aus metallischen Lagen (8) nach einem der Ansprüche 12 bis 23.

## Claims

1. A process for producing a metallic layer (8) which, at least in subregions, has structures comprising wave valleys (11) and wave peaks (10) and which has an upper contacting surface (17) that is formed at least in part from the wave peaks (10) and a lower contacting surface (22) that is formed at least in part from the wave valleys (11) in which the metallic layer (8) having at least one first region (2) with a first material thickness (D1) and a second region (3) with a second material thickness (D2) that is different than the first material thickness (D1) in the longitudinal direction (21) along the wave peaks (10) and the wave valleys (11), **characterized in that** the structures are formed in such a way in the longitudinal direction that, a) irrespective of the particular material thickness (D1, D2), both regions (2, 3) have upper contacting surfaces (17) which are substantially aligned in the longitudinal direction (21) in the region of the wave peaks (10) and b) irrespective of the particular material thickness (D1, D2), both regions (2, 3) have lower contacting surfaces (22) which are substantially aligned in the longitudinal direction (21) in the region of the wave valleys (11)

2. The process as claimed in claim 1, **characterized in that** the region (3) having the smaller material thickness (D2) is at least partially structured, whereas the other region (2) is substantially smooth.

3. The process as claimed in claim 1, **characterized in that** the first region (2) and the second region (3) have structures.

4. The process as claimed in one of the preceding claims, **characterized in that** at least one of the regions (2) is formed from a material which is at least partially permeable to a fluid, preferably from a metallic fiber material.

5. The process as claimed in one of the preceding claims, **characterized in that** the metallic layer (8) is folded over in at least one region (2, 3).

6. The process as claimed in one of claims 1 to 5, **characterized in that** the structures are formed at least in part by stamping.

7. The process as claimed in claim 6, **characterized in that** the structures are formed by corrugating and then stamping.

8. The process as claimed in one of claims 1 to 5, **characterized in that** the structures are formed by stepwise corrugating.

9. The process as claimed in claim 7 or 8, **characterized in that** the corrugating forms sinusoidal, square and/or triangular waves, in particular different shapes in the first region (2) and in the second region (3).

10. The process as claimed in one of the preceding claims, **characterized in that** the first region (2) and the second region (3) at least partially overlap one another in an overlap region (20).

11. The process as claimed in claim 10, **characterized in that** the first region (2) and the second region (3) are connected to one another in the overlap region (20) by a joining technique, preferably by thermal joining processes, in particular welding and/or soldering, and/or mechanical joining processes, in particular riveting.

12. A metallic layer which at least in subregions has structures comprising wave peaks (10) and wave valleys (11), in particular for constructing a honeycomb body (6), the wave peaks (10) at least in part forming an upper contacting surface (17) and the wave valleys (11) at least in part forming a lower contacting surface (22), and the metallic layer (8) having at least one first region (2) with a first material thickness (D1) and a second region (3) with a second material thickness (D2) that is different than the first material thickness (D1) in the longitudinal direction (21) along the wave peaks (10) and the wave valleys (11), **characterized in that** the structures are formed in such a way that, a) irrespective of the particular material thickness (D1, D2), the two regions (2, 3) have upper contacting surfaces (17) which are substantially aligned in the longitudinal direction (21) in the region of the wave peaks (10) and b) irrespective of the particular material thickness (D1, D2), the two regions (2, 3) have lower contacting surfaces (22) which are substantially aligned in the longitudinal direction (21) in the region of the wave valleys (11)

13. The metallic layer as claimed in claim 12, **characterized in that** the region (3) having the smaller material thickness (D2) is at least partially structured, whereas the other region (2) is substantially smooth.

14. The metallic layer as claimed in claim 12, **characterized in that** the first region (2) and the second region (3) have structures.

15. The metallic layer as claimed in one of claims 12 to 14, **characterized in that** the sheet-metal layer (8) is folded over in at least one end-side end region.

16. The metallic layer as claimed in one of claims 12 to 15, **characterized in that** at least one of the regions (2, 3) is formed from a material which at least in part allows a fluid to flow through it, preferably a metallic fiber material.

17. The metallic layer as claimed in one of claims 12 to 16, **characterized in that** the first region (2) and the second region (3) at least partially overlap one another in an overlap region (20).

18. The metallic layer as claimed in claim 17, **characterized in that** the regions (2, 3) are connected to one another in the overlap region (20) by a thermal joining process, preferably welding, in particular roll seam welding, and/or soldering.

19. The metallic layer as claimed in claim 17 or 18, **characterized in that** the regions (2, 3) are connected to one another in the overlap region (20) by a mechanical joining process, preferably riveting.

20. The metallic layer as claimed in one of claims 12 to 19, **characterized in that** the structures are at least partially stamped.

21. The metallic layer as claimed in claim 20, **characterized in that** the structures are formed by corrugating and then stamping.

22. The metallic layer as claimed in one of claims 12 to 19, **characterized in that** the structures are formed by stepwise corrugating.

23. The metallic layer as claimed in claim 21 or 22, **characterized in that** the waves are sinusoidal, triangular and/or square waves, in particular different structures in the first region (2) and in the second region (3).

24. A honeycomb body, at least partially constructed from metallic layers (8) which have been produced by the process as claimed in one of claims 1 to 11, or from metallic layers (8) as claimed in one of claims 12 to 23.

## Revendications

1. Procédé destiné à la fabrication d'une couche métallique (8) présentant au moins dans des régions partielles des structures avec des creux d'ondes (11) et des crêtes d'ondes (10) avec une surface d'appui supérieure (17) formée au moins partiellement à partir des crêtes d'ondes (10) et avec une surface d'appui inférieure (22) formée au moins partiellement à partir des creux d'ondes (11), la couche métallique (8) présentant en direction longitudinale (21) des crêtes d'ondes (10) et des creux d'ondes (11) au moins une première région (2) ayant une première épaisseur de matériau (D1) et une deuxième région (3) ayant une deuxième épaisseur de matériau (D2) qui diffère de la première épaisseur de matériau (D1), **caractérisé en ce que** la formation des structures en direction longitudinale est effectuée de manière telle que a) indépendamment de l'épaisseur de matériau respective (D1, D2), les deux régions (2, 3) ont dans la région des crêtes d'ondes (10) des surfaces d'appui supérieures 17 qui s'alignent en direction longitudinale (21), et **en ce que** b) indépendamment de l'épaisseur de matériau (D1, D2) respective les deux régions (2, 3) ont dans la région des creux d'ondes (11) des surfaces d'appui inférieures (22) qui s'alignent sensiblement en direction longitudinale (21).

2. Procédé selon la revendication 1, **caractérisé en ce que** la région (3) ayant l'épaisseur de matériau (D2) plus mince, est structurée au moins partiellement, tandis que l'autre région (2) est sensiblement lisse.

3. Procédé selon la revendication 1, **caractérisé en ce que** la première région (2) et la deuxième région (3) ont des structures.

4. Procédé selon l'une des revendications précédentes, **caractérisé en ce qu'**au moins une des régions (2) est réalisée d'un matériau perméable au moins partiellement à un fluide, de préférence d'un matériau de fibres métalliques.

5. Procédé selon l'une des revendications précédentes, **caractérisé en ce que** la couche métallique (8) est pliée dans au moins une région (2, 3).

6. Procédé selon l'une des revendications 1 à 5, **caractérisé en ce que** le façonnage des structures est effectué au moins partiellement par estampage.

7. Procédé selon la revendication 6, **caractérisé en ce que** la formation des structures est effectuée par ondulation et par estampage subséquent.

8. Procédé selon l'une des revendications 1 à 5, **caractérisé en ce que** la formation des structures est effectuée par ondulation échelonnée.

9. Procédé selon l'une des revendications 7 ou 8, **caractérisé en ce que** par l'ondulation des ondes sinusoïdales, des ondes rectangulaires et/ou des ondes triangulaires, notamment des formes différentes dans la première région (2) et dans la deuxième région (3), sont formées.

10. Dispositif selon l'une des revendications précédentes, **caractérisé en ce que** la première région (2) et la deuxième région (3) se recouvrent au moins partiellement dans une région à recouvrement (20).

11. Dispositif selon la revendication 10, **caractérisé en ce que** la première région (2) et la deuxième région (3) sont reliées les unes aux autres par technique de jointoiement dans la région de recouvrement (20), de préférence par des procédés de jointoiement thermique, notamment le soudage et/ou le brasage, et/ou par des procédés de jointoiement mécaniques, notamment par le rivetage.

12. Couche métallique qui présente au moins dans des régions partielles des structures avec des crêtes d'ondes (10) et des creux d'ondes (11), pour construire notamment un corps en nids d'abeilles (6), les crêtes d'ondes (10) formant au moins partiellement une surface d'appui supérieure (17) et les creux d'ondes (11) au moins partiellement une surface d'appui inférieure (22) et la couche métallique (8) ayant en direction longitudinale (21) des crêtes d'ondes et des creux d'ondes (11) au moins une première région (2) avec une première épaisseur de matériau (D1) et une deuxième région (3) avec une deuxième épaisseur de matériau (D2) qui diffère de la première épaisseur de matériau (D1), **caractérisé en ce que** les structures sont réalisées de manière telle que a) indépendamment de l'épaisseur de matériau respective (D1, D2) les deux régions (2, 3) ont dans la région des crêtes d'ondes (10) en direction longitudinale (21) des surfaces d'appui supérieures (17) qui s'alignent, et **en ce que** b) indépendamment de l'épaisseur de matériau respective (D1, D2) les deux régions (2, 3) ont dans la région des creux d'ondes (11) en direction longitudinale (21) des surfaces d'appui inférieures (22) qui sont sensiblement alignées.

13. Couche métallique selon la revendication 12, **caractérisée en ce que** la région (3) ayant l'épaisseur de matériau plus mince (D2) est au moins partiellement structurée, tandis que l'autre région (2) est sensiblement lisse.

14. Couche métallique selon la revendication 12, **caractérisée en ce que** la première région (2) et la deuxième région (3) ont des structures.

15. Couche métallique selon l'une des revendications 12 à 14, **caractérisée en ce que** la couche métallique (8) est pliée dans au moins une région d'extrémité frontale.

16. Couche métallique selon l'une des revendications 12 à 15, **caractérisée en ce qu'**au moins une des régions (2, 3) est formée d'un matériau à travers lequel peut s'écouler au moins partiellement un fluide, de préférence d'un matériau de fibre métallique.

17. Couche métallique selon l'une des revendications 12 à 16, **caractérisée en ce que** la première région (2) et la deuxième région (3) se recouvrent mutuellement au moins partiellement dans une région de recouvrement (20).

18. Couche métallique selon la revendication 17, **caractérisée en ce que** dans la région de recouvrement (20) les régions (2, 3) sont reliées l'une à l'autre par un procédé de jointoiement, de préférence le soudage, notamment le procédé pour la soudure à la molette et/ou le brasage.

19. Couche métallique selon la revendication 17 ou 18, **caractérisée en ce que** les régions (2, 3) sont reliées l'une à l'autre dans la région de recouvrement (20) par un procédé de jointoiement mécanique, de préférence par rivetage.

20. Couche métallique selon les revendications 12 à 19, **caractérisée en ce que** les structures sont estampées au moins partiellement.

21. Couche métallique selon la revendication 20, **caractérisée en ce que** les structures sont formées par ondulation et estampage subséquent.

22. Couche métallique selon l'une des revendications 12 à 19, **caractérisée en ce que** les structures sont réalisées par ondulation échelonnée.

23. Couche métallique selon la revendication 21 ou 22, **caractérisée en ce que** les ondes sont des ondes sinusoïdales, des ondes rectangulaires et/ou des ondes triangulaires, notamment des structures différentes dans la première région (2) et dans la deuxième région (3)

24. Corps en nids d'abeilles, construit au moins partiellement de couches métalliques (8), qui ont été fabriquées selon le procédé selon l'une des revendications 1 à 11 ou de couches métalliques (8) selon l'une des revendications 12 à 23.
